# EUROPEAN PATENT APPLICATION

(11) **EP 4 667 527 A1**
(43) Date of publication of application: **24.12.2025**
(21) Application number: 24901124.8
(22) Date of filing: 06.12.2024
(51) Int. Cl.: C08L 67/02, C08L 3/02, C08G 63/91, C08J 5/18

(54) **BIODEGRADABLE COMPOSITION AND BIODEGRADABLE FILM**

(30) Priority: 08.12.2023 KR 20230177649; 05.12.2024 KR 20240179459
(71) Applicant: LG Chem, Ltd., Seoul 07336 (KR)
(72) Inventor: SHIM, Hong Shik, Daejeon 34122 (KR); PARK, Hyunwoo, Daejeon 34122 (KR); JE, Hwaheon, Daejeon 34122 (KR); KIM, Hyunju, Daejeon 34122 (KR); YUN, Haesung, Daejeon 34122 (KR); LEE, Myunghan, Daejeon 34122 (KR); MOON, Jungmi, Daejeon 34122 (KR)
(74) Representative: Goddar, Heinz J.
(86) International application number: PCT/KR2024/019936
(87) International publication number: WO 2025/121938

(57) **Abstract**

The present invention provides a biodegradable composition and a biodegradable film comprising polybutylene adipate terephthalate and polybutylene adipate terephthalate with maleic acid ester-bonded to terminal hydroxyl groups.

## Description

### FIELD OF THE INVENTION

### CROSS-REFERENCE TO RELATED APPLICATION(S)

The present application is based on, and claims priority from, Korean Patent Application No. 10-2023-0177649 filed on December 8, 2023, and Korean Patent Application No. 10-2024-0179459 filed on December 5, 2024, respectively, the disclosures of which are hereby incorporated by reference herein in their entirety.

The present invention relates to a biodegradable composition and a biodegradable film.

### BACKGROUND OF THE INVENTION

With the recent surge in interest in environmental protection and eco-friendliness, there is an increasing need for methods of cultivating eco-friendly agricultural products. One such eco-friendly agricultural method is known as mulching, where the soil surface is covered with a mulching film during crop cultivation. This prevents the growth of weeds, protects against pests, maintains soil moisture, regulates soil temperature, prevents soil erosion due to rainwater, and reduces pesticide use.

Although mulching films greatly contribute to the productivity of agricultural products, they pose challenges in terms of collection and recycling after use. Typically, synthetic resins such as polypropylene and polyethylene are used, with biodegradable components added as additives to impart biodegradability. However, the synthetic resin itself is not biodegradable. Additionally, any non-biodegradable synthetic resin left behind poses a risk of soil contamination.

Attempts have been made to manufacture mulching films using polybutylene adipate terephthalate (PBAT), a biodegradable plastic. However, while PBAT exhibits high elongation, its mechanical properties, such as Young's modulus, are inferior compared to traditional films like polyethylene. Furthermore, PBAT is a 100% petroleum-based material, resulting in a low bio-based content.

Efforts have been made to enhance the properties of polybutylene adipate terephthalate (PBAT) by compounding it with various biodegradable materials and increasing the bio-based content. However, the compatibility between polybutylene adipate terephthalate and other biodegradable materials is low, leading to reduced tensile properties.

### SUMMARY OF THE INVENTION

### TECHNICAL PROBLEM

The present invention aims to provide a biodegradable composition with excellent biodegradability, compatibility, and thermal diffusivity, and a biodegradable film manufactured from it with superior mechanical properties such as biodegradability and tensile strength, and an increased content of bio-based raw materials.

### TECHNICAL SOLUTION

According to one embodiment of the present invention, a biodegradable composition is provided that includes polybutylene adipate terephthalate and polybutylene adipate terephthalate with maleic acid ester-bonded to the terminal hydroxyl group, where the polybutylene adipate terephthalate with maleic acid ester-bonded to the terminal hydroxyl group contains maleic acid in an amount of 2.0% by weight or more 5.0% by weight or less.

Furthermore, according to another embodiment of the present invention, a biodegradable film is provided that includes polybutylene adipate terephthalate and polybutylene adipate terephthalate with maleic acid ester-bonded to the terminal hydroxyl group, where the polybutylene adipate terephthalate with maleic acid ester-bonded to the terminal hydroxyl group contains maleic acid in an amount of 2.0% by weight or more 5.0% by weight or less.

Hereinafter, the biodegradable composition and biodegradable film according to specific embodiments of the invention will be described in more detail.

Unless otherwise specified throughout this specification, the terms "include" or "contain" refer to the inclusion of a component (or ingredient) without limitation and cannot be interpreted as excluding the addition of other components (or ingredients).

Also, unless otherwise specified in this specification, the weight-average molecular weight of polybutylene adipate terephthalate, polybutylene adipate terephthalate with maleic acid ester-bonded to the terminal hydroxyl group, etc., can be measured using gel permeation chromatography (GPC). Specifically, dissolve the prepolymer or copolymer in chloroform at a concentration of 2 mg/ml, inject 20 µL into the GPC, and perform the GPC analysis at 40°C. At this time, use chloroform as the mobile phase of the GPC, introduce it at a flow rate of 1.0 mL/min, and use two Agilent Mixed-B columns connected in series, with an RI Detector as the detector. Derive the Mw value using the calibration curve formed with polystyrene standard samples. Nine types of polystyrene standard samples with weight-average molecular weights of 2,000 g/mol, 10,000 g/mol, 30,000 g/mol, 70,000 g/mol, 200,000 g/mol, 700,000 g/mol, 2,000,000 g/mol, 4,000,000 g/mol, and 10,000,000 g/mol were used.

To prepare a composition for manufacturing biodegradable films, other biodegradable materials, such as thermoplastic starch, can be compounded with polybutylene adipate terephthalate. However, since polybutylene adipate terephthalate is hydrophobic while thermoplastic starch is hydrophilic, they do not mix well, resulting in reduced compatibility.

In response, the inventors discovered that using 'polybutylene adipate terephthalate with maleic acid ester-bonded to the terminal hydroxyl group' containing a predetermined amount of maleic acid as a compatibilizer in a biodegradable composition containing polybutylene adipate terephthalate improves compatibility, thereby enhancing the mechanical properties, such as tensile strength, of the biodegradable film manufactured from such a composition.

Moreover, as the content of thermoplastic starch in the biodegradable composition containing polybutylene adipate terephthalate increases, the cost becomes cheaper, making it economical, and biodegradability improves, with an increased content of bio-based carbon. By using 'polybutylene adipate terephthalate with maleic acid ester-bonded to the terminal hydroxyl group' as a compatibilizer in the biodegradable composition, a large amount of thermoplastic starch can be included to exhibit the aforementioned effects.

According to one embodiment of the invention, a biodegradable composition is provided that includes polybutylene adipate terephthalate and polybutylene adipate terephthalate with maleic acid ester-bonded to the terminal hydroxyl group, where the polybutylene adipate terephthalate with maleic acid ester-bonded to the terminal hydroxyl group contains maleic acid in an amount of 2.0% by weight or more 5.0% by weight or less.

For example, the polybutylene adipate terephthalate with maleic acid ester-bonded to the terminal hydroxyl group may contain maleic acid in an amount of 2.2% by weight or more, 2.4% by weight or more, 2.5% by weight or more, 2.7% by weight or more, 2.9% by weight or more, 3.0% by weight or more, and 4.8% by weight or less, 4.6% by weight or less, 4.5% by weight or less, 4.3% by weight or less, 4.1% by weight or less, 4.0% by weight or less, based on 100% by weight of polybutylene adipate terephthalate contained in the polybutylene adipate terephthalate with maleic acid ester-bonded to the terminal hydroxyl group.

If maleic acid is included in too little amount in the polybutylene adipate terephthalate with maleic acid ester-bonded to the terminal hydroxyl group, the compatibility of the biodegradable composition containing the polybutylene adipate terephthalate with maleic acid ester-bonded to the terminal hydroxyl group may decrease. The compatibility of the biodegradable composition can be evaluated by measuring the specific surface area, which is a factor indicating the degree of recovery of the composition when the strain is increased and then decreased. A smaller non-recoverable area indicates better distribution of the dispersed phase in the continuous phase contained in the composition, resulting in better compatibility. On the other hand, when maleic acid is included in too little amount in the polybutylene adipate terephthalate with maleic acid ester-bonded to the terminal hydroxyl group, a high non-recoverable area may appear, leading to decreased compatibility.

Additionally, if maleic acid is included in too much amount in the polybutylene adipate terephthalate with maleic acid ester-bonded to the terminal hydroxyl group, the thermal diffusivity of the biodegradable composition may decrease, deteriorating moldability and/or processability and increasing process operating costs. Specifically, in the process of manufacturing films by reactive extrusion of the biodegradable composition, the compound discharged from the extruder passes through a cooling water tank, is cooled, and then cut (pelletized). **In** the case of a biodegradable composition containing polybutylene adipate terephthalate with maleic acid ester-bonded to the terminal hydroxyl group with too much maleic acid, the thermal diffusivity is low, and the cooling rate of the compound discharged from the extruder is slow, making cutting difficult. Consequently, moldability and/or processability may deteriorate, or additional cooling equipment may be required, increasing process operating costs.

The 'polybutylene adipate terephthalate with maleic acid ester-bonded to the terminal hydroxyl groups' can be used as a compatibilizer to improve the compatibility of biodegradable compositions. Additionally, the 'polybutylene adipate terephthalate with maleic acid ester-bonded to the terminal hydroxyl groups' can act as a chain extender to increase molecular weight, enhance melt viscosity, and improve formability such as elongation properties.

The 'polybutylene adipate terephthalate with maleic acid ester-bonded to the terminal hydroxyl groups' can be prepared by esterification of maleic acid with the terminal hydroxyl groups of polybutylene adipate terephthalate. For example, the polybutylene adipate terephthalate with maleic acid ester-bonded to the terminal hydroxyl groups can be represented by the following chemical formula 1 or 2.

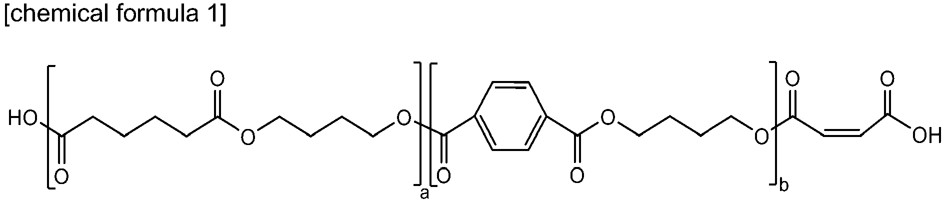

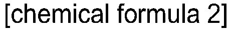

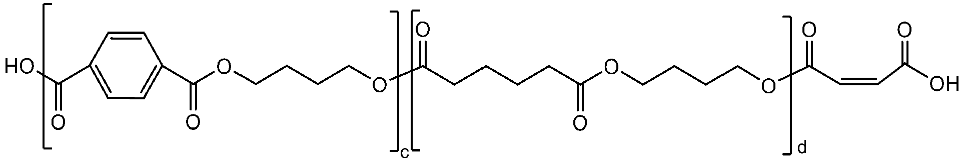

In the chemical formulas 1 and 2 above,
a to d can each independently be an integer from 1 to 500, 5 to 450, 10 to 400, or 20 to 300.

The 'polybutylene adipate terephthalate with maleic acid ester-bonded to the terminal hydroxyl group' represented by chemical formula 1 may be ester-bonded such that one carboxyl group contained in the maleic acid ester-reacts with the terminal hydroxyl group of polybutylene adipate terephthalate. Additionally, the 'polybutylene adipate terephthalate with maleic acid ester-bonded to the terminal hydroxyl group' represented by chemical formula 2 may be ester-bonded such that each of the two carboxyl groups contained in the maleic acid ester-reacts with different terminal hydroxyl groups of polybutylene adipate terephthalate.

The polybutylene adipate terephthalate with maleic acid ester-bonded to the terminal hydroxyl group can be prepared by ester-reacting maleic anhydride with polybutylene adipate terephthalate as described above. By adjusting the content of maleic anhydride, the content of polybutylene adipate terephthalate, the reaction temperature, reaction time, and the type and content of additives, it is possible to manufacture polybutylene adipate terephthalate with maleic acid ester-bonded to the terminal hydroxyl group, and control the weight average molecular weight, structure, and viscosity of such polybutylene adipate terephthalate with maleic acid ester-bonded to the terminal hydroxyl group.

Meanwhile, conventionally, there have been cases where a compatibilizer with maleic anhydride graft-bonded to polybutylene adipate terephthalate is used. However, it is difficult for radicals to form in the middle of the polybutylene adipate terephthalate chain, or the grafting reaction efficiency is low due to steric hindrance, whereas the polybutylene adipate terephthalate with maleic acid ester-bonded has the advantage of significantly higher reaction efficiency.

Furthermore, when using a 'compatibilizer with maleic anhydride graft-bonded to polybutylene adipate terephthalate' instead of 'polybutylene adipate terephthalate with maleic acid ester-bonded to the terminal hydroxyl group' in the biodegradable composition and biodegradable film, additional process operations and long process operation times are required to manufacture the low-efficiency compatibilizer, leading to higher manufacturing costs. Moreover, due to the need to use a highly toxic radical initiator, there are issues concerning environmental safety and the necessity for careful handling.

Polybutylene adipate terephthalate with maleic acid ester-bonded to the terminal hydroxyl group may have a weight average molecular weight of 50,000 or more 200,000 or less, 70,000 or more 190,000 or less, 90,000 or more 180,000 or less, 100,000 or more 170,000 or less, or 120,000 or more 160,000 or less. If the weight average molecular weight of the polybutylene adipate terephthalate with maleic acid ester-bonded to the terminal hydroxyl group does not satisfy the aforementioned range, the effect of improving compatibility may not be observed, potentially leading to a decrease in the mechanical properties such as tensile strength of the film produced from the composition.

Furthermore, it is preferable that the polybutylene adipate terephthalate with maleic acid ester-bonded to the terminal hydroxyl group has a smaller weight average molecular weight than that of the polybutylene adipate terephthalate included in the biodegradable film according to the embodiment. For example, the weight average molecular weight of the polybutylene adipate terephthalate with maleic acid ester-bonded to the terminal hydroxyl group may be 0.9 times or less than that of the polybutylene adipate terephthalate. For instance, the weight average molecular weight of the polybutylene adipate terephthalate with maleic acid ester-bonded to the terminal hydroxyl group may be 0.4 times or more 0.8 times or less, 0.5 times or more 0.7 times or less, or 0.5 times or more 0.6 times or less that of the polybutylene adipate terephthalate.

Additionally, when manufacturing a film by reactive extrusion of the biodegradable composition according to the embodiment, it is preferable that the polybutylene adipate terephthalate with maleic acid ester-bonded to the terminal hydroxyl group has a lower viscosity compared to other components, such as polybutylene adipate terephthalate and thermoplastic starch, at the process temperature. When the compatibilizer, polybutylene adipate terephthalate with maleic acid ester-bonded to the terminal hydroxyl group, has a lower viscosity than other components, it exhibits excellent fluidity during extrusion, allowing it to be well distributed at the interface between polybutylene adipate terephthalate and thermoplastic starch, thereby enhancing compatibility.

For example, the viscosity of the polybutylene adipate terephthalate with maleic acid ester-bonded to the terminal hydroxyl group may range from 1,000 Pa.s or more 5,000 Pa.s or less at a temperature of 120 °C to 180 °C, 130 °C to 170 °C, 140 °C to 160 °C, or 150 °C. For instance, the viscosity may be 1,300 Pa.s or more, 1,600 Pa.s or more, 1,800 Pa.s or more, 2,000 Pa.s or more, 2,100 Pa.s or more, 2,200 Pa.s or more, and 4,800 Pa.s or less, 4,600 Pa.s or less, 4,400 Pa.s or less.

If the viscosity of the polybutylene adipate terephthalate with maleic acid ester-bonded to the terminal hydroxyl group is excessively high, the effect of improving compatibility may not be observed, potentially leading to a decrease in the mechanical properties such as tensile strength of the film produced from the composition. Conversely, if the viscosity is excessively low, the thermal diffusivity of the biodegradable composition may decrease, resulting in inferior moldability and/or processability, and higher process operating costs.

In the biodegradable composition according to the embodiment, the polybutylene adipate terephthalate with maleic acid ester-bonded to the terminal hydroxyl group may be included in an amount of 0.5% by weight or more 10.0% by weight or less based on 100% by weight of the total solid content of the biodegradable composition. For example, it may be included in an amount of 0.7% by weight or more, 0.9% by weight or more, 1.0% by weight or more, 2.0% by weight or more, and 9.0% by weight or less, 7.0% by weight or less, 6.0% by weight or less, 5.0% by weight or less, based on 100% by weight of the total solid content of the biodegradable composition. If the amount of polybutylene adipate terephthalate with maleic acid ester-bonded to the terminal hydroxyl group is excessively low, the effect of improving compatibility may not be observed, potentially leading to a decrease in the mechanical properties such as tensile strength of the film produced from the composition. Conversely, if it is excessively high, the melt viscosity may become excessively high, potentially degrading moldability.

The biodegradable composition may include polybutylene adipate terephthalate (PBAT) as a biodegradable resin. The polybutylene adipate terephthalate can be included in an amount of 30 to 80% by weight based on the total 100% by weight of solid content of the biodegradable composition, and more specifically, it can be included in an amount of 30% by weight or more, 35% by weight or more, 40% by weight or more, and 80% by weight or less, 75% by weight or less, 70% by weight or less. If the polybutylene adipate terephthalate (PBAT) is included too little in the biodegradable composition, the elongation of the film produced therefrom may decrease, and if the polybutylene adipate terephthalate is included too much in the biodegradable composition, the tensile properties such as the modulus of elasticity and yield tensile strength of the film produced therefrom may deteriorate.

Additionally, the biodegradable composition may include thermoplastic starch to improve the processability of polybutylene adipate terephthalate and to accelerate the biodegradation rate. The thermoplastic starch may be a starch to which a plasticizer is added to give thermoplasticity, allowing it to change shape freely without carbonizing even at a certain temperature, similar to conventional general-purpose resins such as polyethylene, polystyrene, and polypropylene.

The thermoplastic starch may include one or more selected from the group consisting of rice starch, wheat starch, corn starch, sweet potato starch, potato starch, tapioca starch, cassava starch, and their modified starches.

Furthermore, the plasticizer included in the natural polymer starch may be one or more selected from the group consisting of isosorbide, glycerol, sorbitol, fructose, formamide, xylitol, corn oil, and edible oil. The plasticizer may be included in an amount of 5% by weight or more and 50% by weight or less, 10% by weight or more and 45% by weight or less, or 15% by weight or more and 35% by weight or less, based on the total 100% by weight of the thermoplastic starch.

The biodegradable composition may include the thermoplastic starch in an amount of 10% by weight or more and 50% by weight or less, based on the total 100% by weight of the solid content of the biodegradable composition. For example, the thermoplastic starch may be included in an amount of 10% by weight or more, 15% by weight or more, 20% by weight or more, 25% by weight or more, and 45% by weight or less, 40% by weight or less, 35% by weight or less, based on the total 100% by weight of the solid content of the biodegradable composition. As the content of thermoplastic starch in the biodegradable composition increases, the cost becomes economical due to its low price, biodegradability improves, and the content of bio-based carbon can increase. However, if the thermoplastic starch is included too much in the biodegradable composition, the elongation of the film produced therefrom may decrease, and if the thermoplastic starch is included too little in the biodegradable composition, the biodegradation rate may slow down, and the tensile properties such as the modulus of elasticity and yield tensile strength of the film produced therefrom may deteriorate.

In the biodegradable composition according to the above embodiment, hydrophobic polybutylene adipate terephthalate and hydrophilic thermoplastic starch may be included. The improvement in their compatibility can be observed when the dispersion phase of the thermoplastic starch is densely and uniformly distributed within the polybutylene adipate terephthalate matrix. Additionally, the compatibility is considered improved as the adhesion at the interface between polybutylene adipate terephthalate and thermoplastic starch becomes stronger. In other words, the more densely and uniformly the dispersion phase of thermoplastic starch is distributed within the polybutylene adipate terephthalate matrix, and the stronger the adhesion at the interface between polybutylene adipate terephthalate and thermoplastic starch, the better the compatibility.

Furthermore, whether the compatibility is improved can be numerically verified through analysis using a Dynamic Mechanical Analyzer (DMA). For example, the glass transition temperature (Tg) of thermoplastic starch and polybutylene adipate terephthalate can be measured using a Dynamic Mechanical Analyzer (DMA) to confirm the improvement in compatibility.

Specifically, as the dispersion phase of thermoplastic starch becomes more densely and uniformly distributed within the polybutylene adipate terephthalate matrix, the glass transition temperature (Tg) of the thermoplastic starch decreases. This glass transition temperature of thermoplastic starch can be analyzed using a DMA to confirm the improvement in compatibility. Moreover, as the adhesion at the interface between polybutylene adipate terephthalate and thermoplastic starch becomes stronger, the dispersion phase of thermoplastic starch effectively transfers stress to the polybutylene adipate terephthalate, increasing the glass transition temperature (Tg) of polybutylene adipate terephthalate, particularly the soft segment of butylene-adipate repeat units. This glass transition temperature of polybutylene adipate terephthalate can be analyzed using a DMA to confirm the improvement in compatibility.

Therefore, the better the compatibility between polybutylene adipate terephthalate and thermoplastic starch, the lower the glass transition temperature (Tg) of the thermoplastic starch. For example, the glass transition temperature (Tg) of thermoplastic starch may be 10 °C or more 140 °C or less, 15 °C or more 120 °C or less, 20 °C or more 100 °C or less, 25 °C or more 80 °C or less, 25 °C or more 50 °C or less, or 25 °C or more 40 °C or less.

Additionally, the better the compatibility between polybutylene adipate terephthalate and thermoplastic starch, the higher the glass transition temperature (Tg) of polybutylene adipate terephthalate. For example, the glass transition temperature (Tg) of polybutylene adipate terephthalate may be -23.0 °C or more -10.0 °C or less, or - 22.5 °C or more -15.0 °C or less.

Furthermore, the absolute value of the difference in the glass transition temperature (Tg) between the thermoplastic starch and polybutylene adipate terephthalate may be 20 °C or more 70 °C or less, 25 °C or more 65 °C or less, 30 °C or more 60 °C or less, or 35 °C or more 59 °C or less.

Additionally, the thermal diffusivity of the biodegradable composition, measured according to ISO Standard 22007-2, may be 0.2700 mm²/s or more 10.000 mm²/s or less, with possibilities of being 0.2750 mm²/s or more, 0.2800 mm²/s or more, 0.2850 mm²/s or more, 0.2900 mm²/s or more, or 0.2950 mm²/s or more, and 8.000 mm²/s or less, 6.000 mm²/s or less, 4.000 mm²/s or less, 3.000 mm²/s or less, or 1.000 mm²/s or less. If the thermal diffusivity is excessively low, the cooling speed of the extruded compound from the extruder becomes slow, making cutting difficult, which can deteriorate moldability and/or processability or increase process operation costs due to the need for additional cooling equipment. Conversely, if the thermal diffusivity is excessively high, compatibility may deteriorate.

According to another embodiment of the present invention, a biodegradable film is provided, which includes polybutylene adipate terephthalate and polybutylene adipate terephthalate with maleic acid ester-bonded to the hydroxyl group at the terminal, where the polybutylene adipate terephthalate with maleic acid ester-bonded to the hydroxyl group at the terminal contains maleic acid in an amount of 2.0% by weight or more 5.0% by weight or less.

The method for manufacturing the biodegradable film is not particularly limited, but can be obtained by conventional film manufacturing methods such as known inflation method, tubular method, and T-die casting method using the biodegradable composition according to one embodiment. For example, the composition can be pelletized, and the pellets can be dried for more than 6 hours at 60 to 100 °C to control the moisture content to 1,200 ppm or less, 500 ppm or less, or 200 ppm or less. Subsequently, the pelletized composite can be applied to a release film, then placed in a thermal press to manufacture the film. At this time, the temperature may be 130 °C to 250 °C, 150 °C to 220 °C, or 160 °C to 200 °C, and the pressure may be 5 MPa to 20 MPa, 8 MPa to 17 MPa, or 10 MPa to 15 MPa.

Therefore, the biodegradable film can include the same configuration as described above in the biodegradable composition. For example, the biodegradable film may include the polybutylene adipate terephthalate, the thermoplastic starch, and the polybutylene adipate terephthalate with maleic acid ester-bonded to the hydroxyl group at the terminal. In addition, the maleic acid content, molecular weight, structure, etc., of the polybutylene adipate terephthalate, the thermoplastic starch, and the polybutylene adipate terephthalate with maleic acid ester-bonded to the hydroxyl group at the terminal are as described above. For example, the weight-average molecular weight of the polybutylene adipate terephthalate with maleic acid ester-bonded to the hydroxyl group at the terminal may be 0.01 times or more and 0.30 times or less of the weight-average molecular weight of the polybutylene adipate terephthalate. Moreover, the biodegradable film may include 0.5% by weight or more 10.0% by weight or less of the polybutylene adipate terephthalate with maleic acid ester-bonded to the hydroxyl group at the terminal relative to the total 100% by weight of the biodegradable film. For example, it may include 0.7% by weight or more, 0.9% by weight or more, 1.0% by weight or more, 2.0% by weight or more, and 9.0% by weight or less, 7.0% by weight or less, 6.0% by weight or less, 5.0% by weight or less relative to the total 100% by weight of the biodegradable film.

The biodegradable film may include 10% by weight or more 50% by weight or less of the thermoplastic starch relative to the total 100% by weight of the biodegradable film. For example, it may include 10% by weight or more, 15% by weight or more, 20% by weight or more, 25% by weight or more, and 45% by weight or less, 40% by weight or less, 35% by weight or less relative to the total 100% by weight of the biodegradable film.

The thickness of the biodegradable film may be 10 to 300 µm, more specifically, 10 µm or more, 13 µm or more, 15 µm or more, 20 µm or more, 25 µm or more, and 300 µm or less, 200 µm or less, 150 µm or less, 100 µm or less, 80 µm or less, 50 µm or less. The thickness within the above range results in strong elasticity, excellent handling, and good winding and unwinding condition of the roll.

If the film thickness is too thin, tensile strength, tear strength, and elongation may deteriorate, leading to holes or tears during use. If the film thickness is too thick, cost competitiveness may decrease. Additionally, the biodegradable film can be used as agricultural mulching film, disposable gloves, medical individual packaging, food packaging, garbage bags, or various industrial product sacks.

The biodegradable film may have a tensile strength of 5 MPa or more, 7 MPa or more, 8 MPa or more, or 5 MPa to 30 MPa, as measured according to ASTM D882-07.

Furthermore, the biodegradable film may have an elongation at break of 300% or more, 350% or more, 400% or more, 420% or more, 430% or more, or 300% to 700% as measured according to ASTM D882-07.

Additionally, the biodegradable film may have a Young's Modulus of 30 MPa or more, 40 MPa or more, 50 MPa or more, 60 MPa or more, or 30 MPa to 800 MPa as measured according to ASTM D882-07.

The maximum tensile strength, elongation at break, and Young's Modulus of the biodegradable film can satisfy the above-mentioned numerical range in both the machine direction (MD) and transverse direction (TD).

### ADVANTAGEOUS EFFECTS

According to the present invention, a biodegradable composition with excellent biodegradability, compatibility, and thermal diffusivity can be provided. Additionally, a biodegradable film manufactured from this composition, which exhibits excellent mechanical properties such as biodegradability and tensile strength and has an increased content of bio-based materials, can be provided.

### DETAILED DESCRIPTION OF THE EMBODIMENTS

The invention will be described in more detail in the following embodiments. However, the following embodiments are merely illustrative of the present invention and do not limit the content of the present invention.

### Manufacturing Example 1: Preparation of Thermoplastic

Starch Corn starch 700 g and glycerol 300 g were mixed based on dry weight and then compounded by introducing them into an extruder. The temperature of the extruder was set at 120 °C, and the screw speed was set at 150 rpm. The extruded strand was cut with a pelletizer to produce thermoplastic starch pellets.

### <Examples and Comparative Examples>

### Example 1

### (1) Preparation of Polybutylene Adipate Terephthalate with Maleic Acid Ester-Bonded to Terminal Hydroxyl Group

Polybutylene adipate terephthalate (PBAT, Solpol 1000N, SOLTECH Co.) 100 g and maleic anhydride 2 g were placed in an internal mixer and reacted while mixing at 160 °C and 50 rpm for 10 minutes to prepare polybutylene adipate terephthalate with maleic acid ester-bonded to the terminal hydroxyl group (weight average molecular weight; 140,000, viscosity measured at 150 °C and 0.1 rad/s: 4339.54 Pa.s).

### (2) Preparation of Biodegradable Composition and Film

Based on dry weight, 750 g of polybutylene adipate terephthalate (PBAT, Solpol 1000N, SOLTECH Co.), 250 g of thermoplastic starch prepared in Manufacturing Example 1, and 50 g of 'polybutylene adipate terephthalate with maleic acid ester-bonded to the terminal hydroxyl group' were hand-mixed to prepare the composition.

It was then introduced into an extruder and compounded. The temperature range of the extruder was 150 °C, the screw speed was set at 200 rpm, and the extruded strand was cut with a pelletizer to produce composite pellets.

### Example 2

### (1) Preparation of Polybutylene Adipate Terephthalate with Maleic Acid Ester-Bonded to Terminal Hydroxy Groups

In an internal mixer, 100 g of polybutylene adipate terephthalate (PBAT, Solpol 1000N, SOLTECH Co.) and 2.5 g of maleic anhydride were added and reacted by mixing for 10 minutes at a temperature of 160 °C and a speed of 50 rpm to prepare polybutylene adipate terephthalate with maleic acid ester-bonded to the terminal hydroxy groups (weight average molecular weight: 136,000, viscosity measured at 150 °C and 0.1 rad/s: 3966.75 Pa.s).

### (2) Preparation of Biodegradable Composition and Film

Based on dry weight, 750 g of polybutylene adipate terephthalate (PBAT, Solpol 1000N, SOLTECH Co.), 250 g of thermoplastic starch prepared in Manufacturing Example 1, and 50 g of the 'polybutylene adipate terephthalate with maleic acid ester-bonded to the terminal hydroxy groups' were hand-mixed to prepare the composition.

Subsequently, it was fed into an extruder for compounding, with the extruder temperature set to 150 °C and the screw speed set to 200 rpm. The extruded strand was then cut with a pelletizer to produce composite pellets.

### Example 3

### (1) Preparation of Polybutylene Adipate Terephthalate with Maleic Acid Ester-Bonded to Terminal Hydroxy Groups

In an internal mixer, 100 g of polybutylene adipate terephthalate (PBAT, Solpol 1000N, SOLTECH Co.) and 3 g of maleic anhydride were added and reacted by mixing for 10 minutes at a temperature of 160 °C and a speed of 50 rpm to prepare polybutylene adipate terephthalate with maleic acid ester-bonded to the terminal hydroxy groups (weight average molecular weight: 133,000, viscosity measured at 150 °C and 0.1 rad/s: 3594.68 Pa.s).

### (2) Preparation of Biodegradable Composition and Film

Based on dry weight, 750 g of polybutylene adipate terephthalate (PBAT, Solpol 1000N, SOLTECH Co.), 250 g of thermoplastic starch prepared in Manufacturing Example 1, and 50 g of the 'polybutylene adipate terephthalate with maleic acid ester-bonded to the terminal hydroxy groups' were hand-mixed to prepare the composition.

Subsequently, it was fed into an extruder for compounding, with the extruder temperature set to 150 °C and the screw speed set to 50 rpm. The extruded strand was then cut with a pelletizer to produce composite pellets.

### Example 4

### (1) Preparation of Polybutylene Adipate Terephthalate with Maleic Acid Ester-Bonded to Terminal Hydroxy Groups

In an internal mixer, 100 g of polybutylene adipate terephthalate (PBAT, Solpol 1000N, SOLTECH Co.) and 4 g of maleic anhydride were added and reacted by mixing for 10 minutes at a temperature of 160 °C and a speed of 50 rpm to prepare polybutylene adipate terephthalate with maleic acid ester-bonded to the terminal hydroxy groups (weight average molecular weight: 133,000, viscosity measured at 150 °C and 0.1 rad/s: 2738.74 Pa.s).

### (2) Preparation of Biodegradable Composition and Film

Based on dry weight, 750 g of polybutylene adipate terephthalate (PBAT, Solpol 1000N, SOLTECH Co.), 250 g of thermoplastic starch prepared in Manufacturing Example 1, and 50 g of the = 'polybutylene adipate terephthalate with maleic acid ester-bonded to the terminal hydroxy groups' were hand-mixed to prepare the composition.

Subsequently, it was fed into an extruder for compounding, with the extruder temperature set to 150 °C and the screw speed set to 200 rpm. The extruded strand was then cut with a pelletizer to produce composite pellets.

### Example 5

### (1) Preparation of Polybutylene Adipate Terephthalate with Maleic Acid Ester-Bonded to Terminal Hydroxy Groups

In an internal mixer, 100 g of polybutylene adipate terephthalate (PBAT, Solpol 1000N, SOLTECH Co.) and 5 g of maleic anhydride were added and reacted by mixing for 10 minutes at a temperature of 160 °C and a speed of 50 rpm to prepare polybutylene adipate terephthalate with maleic acid ester-bonded to the terminal hydroxy groups (weight average molecular weight: 135,000, viscosity measured at 150 °C and 0.1 rad/s: 2269.52 Pa.s).

### (2) Preparation of Biodegradable Composition and Film

Based on dry weight, 750 g of polybutylene adipate terephthalate (PBAT, Solpol 1000N, SOLTECH Co.), 250 g of thermoplastic starch prepared in Manufacturing Example 1, and 50 g of the 'polybutylene adipate terephthalate with maleic acid ester-bonded to the terminal hydroxy groups' were hand-mixed to prepare the composition.

Subsequently, it was fed into an extruder for compounding, with the extruder temperature set to 150 °C and the screw speed set to 200 rpm. The extruded strand was then cut with a pelletizer to produce composite pellets.

### Comparative Example 1

### (1) Preparation of Polybutylene Adipate Terephthalate with Maleic Acid Ester-Bonded to Terminal Hydroxy Groups

In an internal mixer, 100 g of polybutylene adipate terephthalate (PBAT, Solpol 1000N, SOLTECH Co.) and 1 g of maleic anhydride were mixed and reacted at 160 °C and 50 rpm for 10 minutes to synthesize polybutylene adipate terephthalate with maleic acid ester-bonded to the terminal hydroxyl groups (weight average molecular weight; 137,000, viscosity measured at 150 °C and 0.1 rad/s is 5589.34 Pa.s).

### (2) Preparation of biodegradable composition and film

Based on dry weight, 750 g of polybutylene adipate terephthalate (PBAT, Solpol 1000N, SOLTECH Co.), 250 g of thermoplastic starch prepared in Manufacturing Example 1, and 50 g of the 'polybutylene adipate terephthalate with maleic acid ester-bonded to the terminal hydroxyl groups' were hand-mixed to prepare the composition.

The mixture was then fed into an extruder for compounding, with the extruder temperature set to 150 °C and the screw speed at 200 rpm. The extruded strand was cut with a pelletizer to produce composite pellets.

### Comparative Example 2

The composition was prepared in the same manner as in Comparative Example 1, except that 6 g of maleic anhydride was used instead of 1 g of maleic anhydride.

### Evaluation

### 1. Compatibility (Non-recoverable area) evaluation

The compatibility of the compositions from the examples and comparative examples was evaluated by measuring the specific surface area of the compositions. Specifically, the compositions were melted on a parallel plate geometry with a diameter of 25 mm on a DHR (Discovery Hybrid Rheometer) from TA Instruments and then pressed to a gap of 1 mm for loading. The storage modulus was measured while increasing the strain from 0.01% to 75% and then decreasing it back to 0.01% at 150 °C and a frequency of 1 Hz. The non-recoverable area is the difference between the area of the storage modulus from 0.01% to 75% strain and the area of the storage modulus from 75% to 0.01% strain

The area under the storage modulus curve refers to the area beneath the line graph with strain on the x-axis and storage modulus on the y-axis. In addition, the non-recovery area is a factor in the degree to which the composition recovers when the strain is increased and then decreased again. A smaller non-recoverable area indicates better distribution of the dispersed phase in the continuous phase, resulting in superior compatibility.

### 2. Measurement of thermal diffusivity

The diffusivity conductivity of the compositions from the examples and comparative examples was measured using the TPS 2200 thermal diffusivity tester by Hot Disk Instruments according to ISO Standard 22007-2.

### 3. Evaluation of tensile properties

The pellets from the examples and comparative examples were used to produce films with a thickness of 15 µm at 150 °C using the Film Blown Unit (BL50T) by Collin. The tensile properties of the film were evaluated according to ASTM D882-07. The tensile properties include tensile strength, elongation at break, and Young's modulus in the machine direction (MD), with the results presented in Table 1 below.

**[Table 1]**

| | Compatibility (Non-recoverable Area) | thermal diffusivity (mm²/s) | Tensile strength (MPa) | elongation at break (%) | Young's modulus (MPa) |
|---|---|---|---|---|---|
| Example 1 | 4568 | 0.8606 | 19.0 | 332.4 | 57.7 |
| Example 2 | 4671 | 0.6122 | 19.1 | 339.5 | 58.0 |
| Example 3 | 4327 | 0.4627 | 21.3 | 363.3 | 59.1 |
| Example 4 | 4188 | 0.3384 | 22.8 | 386.4 | 59.9 |
| Example 5 | 3719 | 0.2952 | 24.0 | 415.5 | 61.6 |
| Comparative Example 1 | 5059 | 1.1256 | 17.2 | 317.6 | 56.4 |
| Comparative Example 2 | 3415 | 0.2633 | 24.5 | 467.3 | 62.1 |

According to Table 1, Examples 1 to 4, which include polybutylene adipate terephthalate with maleic acid ester-bonded to the terminal hydroxyl groups comprising 2.0% by weight or more 5.0% by weight or less of maleic acid, were found to have superior compatibility compared to Comparative Example 1, which uses 1.0% by weight of maleic anhydride. Meanwhile, Comparative Example 2, using 6.0% by weight of maleic anhydride, was found to have a significantly lower thermal diffusivity, resulting in slower cooling rates of the compound discharged from the extruder, making it difficult to cut into pellets.

## Claims

1. A biodegradable composition comprising:
polybutylene adipate terephthalate; and
polybutylene adipate terephthalate with maleic acid ester-bonded to the terminal hydroxyl group,
wherein the polybutylene adipate terephthalate with maleic acid ester-bonded to the terminal hydroxyl group contains maleic acid in an amount of 2.0 % by weight or more 5.0% by weight or less.

2. The biodegradable composition of claim 1,
wherein the polybutylene adipate terephthalate with maleic acid ester-bonded to the terminal hydroxyl group has a viscosity of 1,000 Pa.s to 5,000 Pa.s.

3. The biodegradable composition of claim 1,
wherein the biodegradable composition contains 0.5% by weight or more 10.0% by weight or less of polybutylene adipate terephthalate with maleic acid ester-bonded to the terminal hydroxyl group, based on 100% by weight of the total solid content of the biodegradable composition.

4. The biodegradable composition of claim 1,
wherein the polybutylene adipate terephthalate with maleic acid ester-bonded to the terminal hydroxyl group is represented by the following chemical formula 1 or 2: 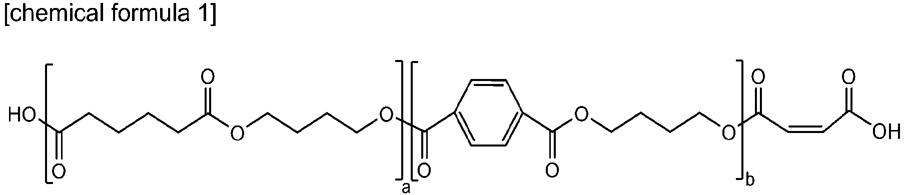 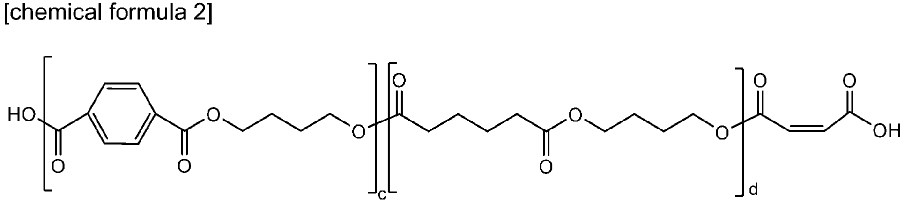
in the above chemical formulas 1 and 2,
a to d are each independently an integer from 1 to 500.

5. The biodegradable composition of claim 1,
wherein the biodegradable composition further comprises thermoplastic starch.

6. The biodegradable composition of claim 5,
wherein the thermoplastic starch includes one or more selected from the group consisting of rice starch, wheat starch, corn starch, sweet potato starch, potato starch, tapioca starch, cassava starch, and their modified starches.

7. The biodegradable composition of claim 5,
wherein the biodegradable composition comprises the thermoplastic starch in an amount of 10% by weight or more 50% by weight or less, based on 100% by weight of the total solid content of the biodegradable composition.

8. The biodegradable composition of claim 5,
wherein the thermoplastic starch has a glass transition temperature (Tg) of 10 °C or more 140 °C or less.

9. The biodegradable composition of claim 5,
wherein the absolute value of the difference in glass transition temperatures (Tg) between the thermoplastic starch and polybutylene adipate terephthalate is 20 °C or more 70 °C or less.

10. The biodegradable composition of claim 1,
wherein the biodegradable composition has a thermal diffusivity of 0.2700 mm²/s or more 10.000 mm²/s or less, measured by ISO Standard 22007-2.

11. A biodegradable film comprising:
polybutylene adipate terephthalate; and
polybutylene adipate terephthalate with maleic acid ester-bonded to the terminal hydroxyl group,
wherein the polybutylene adipate terephthalate with maleic acid ester-bonded to the terminal hydroxyl group contains maleic acid in an amount of 2.0 % by weight or more 5.0% by weight or less.

12. The biodegradable film of claim 11,
wherein the biodegradable film comprises 0.5% by weight to 10.0% by weight of polybutylene adipate terephthalate with maleic acid ester-bonded to the terminal hydroxyl group, based on 100% by weight of the total biodegradable film.

13. The biodegradable film of claim 11,
wherein the biodegradable film further comprises thermoplastic starch.

14. The biodegradable film of claim 11,
wherein the biodegradable film has a tensile strength of 5 MPa or more, measured according to ASTM D882-07.
